(19)

**Europäisches Patentamt**
**European Patent Office**
**Office européen des brevets**

(11) **EP 4 560 284 A1**

(12) **EUROPEAN PATENT APPLICATION**
published in accordance with Art. 153(4) EPC

(43) Date of publication:
**28.05.2025 Bulletin 2025/22**

(51) International Patent Classification (IPC):
*G01M 17/04* (2006.01)     *G01M 13/00* (2019.01)
*G05B 13/04* (2006.01)     *G05B 23/02* (2006.01)

(21) Application number: **23859840.3**

(52) Cooperative Patent Classification (CPC):
**G01M 13/00; G01M 17/04; G01M 99/00;
G05B 13/04; G05B 23/02**

(22) Date of filing: **05.07.2023**

(86) International application number:
**PCT/JP2023/024982**

(87) International publication number:
**WO 2024/048070 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.09.2022 JP 2022140118**

(71) Applicant: **Saginomiya Seisakusho, Inc.
Tokyo 165-0033 (JP)**

(72) Inventors:
• **IN Eisei
Sayama-shi, Saitama 350-1395 (JP)**
• **HOSAKA Tomohiro
Sayama-shi, Saitama 350-1395 (JP)**
• **KAWANISHI Hirofumi
Sayama-shi, Saitama 350-1395 (JP)**
• **ENOMOTO Ayumu
Sayama-shi, Saitama 350-1395 (JP)**

(74) Representative: **Bandpay & Greuter
11, rue Christophe Colomb
75008 Paris (FR)**

(54) **TEST SYSTEM AND METHOD FOR CONTROLLING TEST SYSTEM**

(57) To provide a test system that can eliminate a response lag of a load system caused by an actuator that actuates a test piece or the like and enable more accurate real-time simulation involving a model and a real machine. To this end, a test system 1 is provided which includes a test piece 40 as a part of a real machine that is to be tested, an actuator 30 that actuates the test piece 40, a virtual model 11 that operates in association with the test piece 40, a controller 20 that controls the actuator 30, a computing device 10 that computes the virtual model 11, and an inverse transfer function correcting unit 50 that corrects a signal from the virtual model with a proper inverse transfer function that is determined based on a transfer function of a system including communication units between the test piece 40 and the actuator 30 and between the actuator 30 and the controller 20 and a communication unit between the computing device 10 and the controller 20, and the controller 20 controls the actuator 30 based on the signal corrected by the inverse transfer function correcting unit 50.

**FIG.1**

**Description**

[Technical Field]

The present invention relates to a test system and a method for controlling the test system. In particular, it relates to a test system that uses a virtual model and a test piece as a part of a real machine.

[Background Art]

By using such a system to develop a new-model vehicle or the like, the cost and time required for development can be reduced. In this test system, for example, the real thing may be substituted for a part or assembly that is difficult to model and used as a test piece, or a part of a real prototype machine or the like may be used as a test piece. The verification of the characteristics of the test piece or the verification of a model excluding the test piece is conducted by so-called Hardware In the Loop Simulation (HILS).

With such a test system, some error can occur between the behavior of the real machine and the request from the model. With regard to the correction of such an error, Patent Literature 1 discloses a trajectory data correcting device that is provided in an NC machine tool or the like and eliminates a contour cutting error caused by servo characteristics that occurs in a numerical controller that achieves contour cutting. In the contour error correction disclosed in Patent Literature 1, for a known command value, command data having an error corrected in advance with an inverse transfer function correcting unit is generated, and the command data is input to the controller. Patent Literature 2 discloses a test system that uses a model including a tire, a lower mass and an upper mass and a test piece formed by a shock absorber, and performs a load test by an actuator applying a load to the shock absorber based on a signal from the model. In Patent Literature 2, the control waveform used by the controller is corrected and updated so as to decrease the error (response lag) between the control waveform and the reference waveform from the model. However, the input waveform to the model is constant (a time waveform over several tens of seconds), and upon completion of each test, the output of the model (that is, the input to the load device) is compared with the previous output, and the error is corrected by using an inverse transfer function offline. The same test is performed using the corrected data until the error is sufficiently small, and then the formal verification test is then performed.

[Citation List]

[Patent Literature]

[Patent Literature 1] Japanese Patent Laid-Open No. 63-233402
[Patent Literature 2] Japanese Patent Laid-Open No. 2004-53452

[Summary of Invention]

[Technical Problem]

With the HILS test system, the input signal to the model changes in real time, and the input from the model to the load device (controller) and the feedback signal from the load device to the model also change in real time. In this way, the feedback from the model and the feedback from the test piece constituted by the real load device form one closed loop and interact with each other in real time. If the feedback signal from the load device lags because of its frequency characteristics or the feedback signals have different magnitudes, the result may deviate from the true characteristics, or the simulation may diverge and the verification may be unable to be achieved. In this regard, according to Patent Literatures 1 and 2, a correction calculation based on an inverse transfer function needs to be performed in advance, and the problem arising from the lag because of the load device cannot be solved in real time. According to Patent Literature 1, since no model is involved, the command signal is determined in advance and does not need to be computed in real time.

According to Patent Literature 2, during the simulation, the output signal from the model at the current time is not used, and the signal corrected in the previous step is used, so that the system is a closed loop. When one simulation ends, a signal for the subsequent step is generated offline. Thus, the system is a non-real time HILS system that cannot be used for HILS verification in which the input signal to the model changes in real time. That is, in Patent Literature 2, an inverse transfer function that allows accurate real-time calculation in the time domain is not used, so that there is a disadvantage that only a predetermined signal can be corrected.

An object of the present invention is to provide a test system and a control method for the test system that can eliminate a response lag of a load system caused by an actuator that actuates a test piece or the like and enable more accurate real-time simulation involving a model and a real machine.

[Solution to Problem]

To solve the problem described above, a test system according to an aspect of the present invention includes a test piece as a part of a real machine that is to be tested, an actuator that actuates the test piece, a virtual model that operates in association with the test piece, a controller that controls the actuator, a computing device that computes the virtual model, and an inverse transfer function correcting unit that corrects a signal from the virtual model with a proper inverse transfer function that is determined based on a transfer function of a system including communication units between the test piece and the actuator and between the actuator and the controller and a communication unit between the computing device and the controller, and the controller controls the actuator based on the signal corrected by the inverse transfer function correcting unit.

A control method for a test system according to an aspect of the present invention is a control method for a test system that includes a test piece as a part of a real machine that is to be tested, an actuator that actuates the test piece, a virtual model that operates in association with the test piece, a controller that controls the actuator, and a computing device that computes the virtual model, and the control method includes a step of correcting a signal from the virtual model with a proper inverse transfer function that is determined based on a transfer function of a system including communication units between the test piece and the actuator and between the actuator and the controller and a communication unit between the computing device and the controller, and a step of controlling the actuator based on the signal corrected in the inverse transfer function correcting step.

[Advantageous Effect of Invention]

According to the aspects described above, the test system can eliminate a response lag of a load system caused by an actuator that actuates a test piece and enable more accurate real-time simulation involving a model and a real machine.

[Brief Description of Drawings]

[Figure 1] Figures 1(a) is a functional block diagram showing a well-known test system that does not perform correction based on a transfer function. Figures 1(b) is a functional block diagram showing a test system that performs correction with an inverse transfer function according to an embodiment.

[Figure 2] Figure 2 is a diagram for illustrating a virtual model shown in Figures 1.

[Figure 3] Figure 3 is a flowchart for illustrating a method of generating an inverse transfer function used in an inverse transfer function correcting unit in Figures 1.

[Figure 4] Figure 4 is a diagram showing an example measurement of a transfer function of a load device including an output unit of a computing device, a controller, an actuator and a test piece shown in Figure 1(a).

[Figure 5] Figures 5 are graphs showing transfer characteristics approximated as a third-order polynomial and measured transfer characteristics (Figure 4) for comparison, Figure 5(a) showing the gain, and Figure 5(b) showing the phase.

[Figure 6] Figures 6 are diagrams showing a theoretical inverse transfer function and an inverse transfer function generated by approximation in the embodiment for comparison, Figure 6(a) showing the gain, and Figure 6(b) showing the phase.

[Figure 7] Figures 7 are diagrams showing, for comparison, an input signal to the controller for the actuator that is not corrected by the inverse transfer function correcting unit and an input signal to the controller for the actuator that has passed through the inverse transfer function correcting unit, and Figure 7(b) is an enlarged diagram of a part of Figure 7(a).

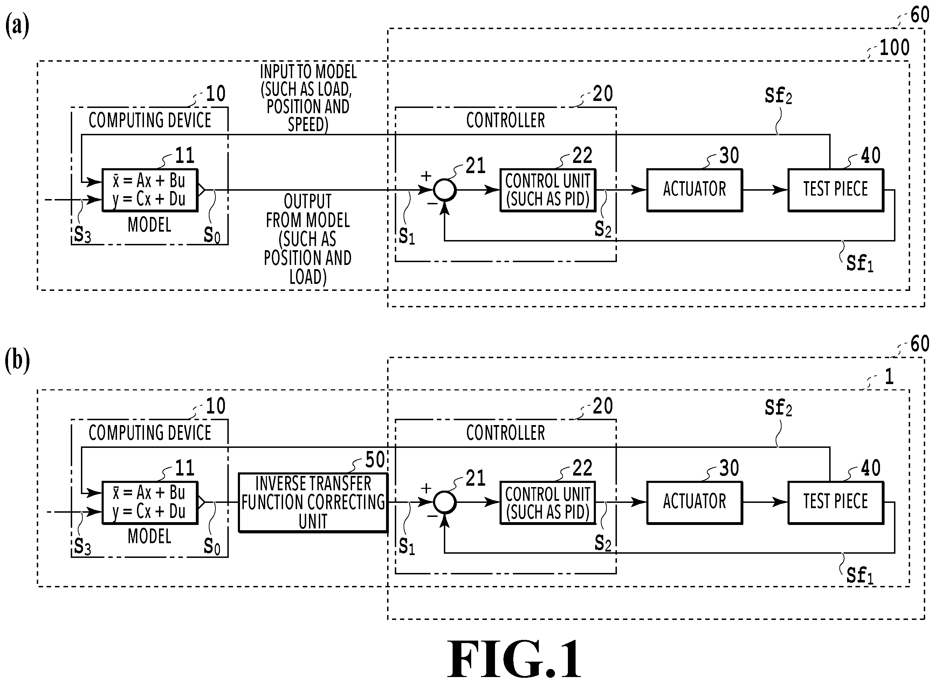

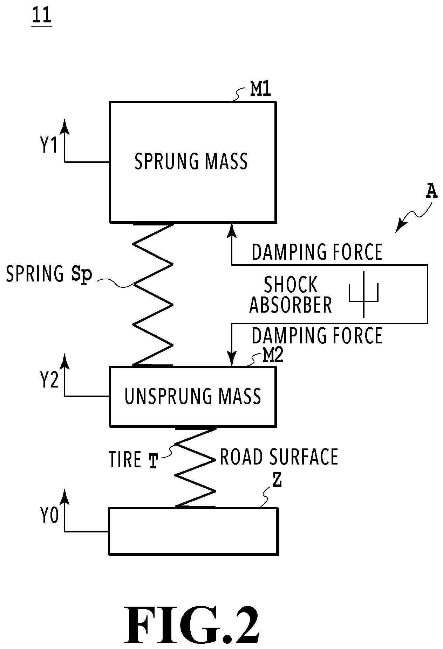

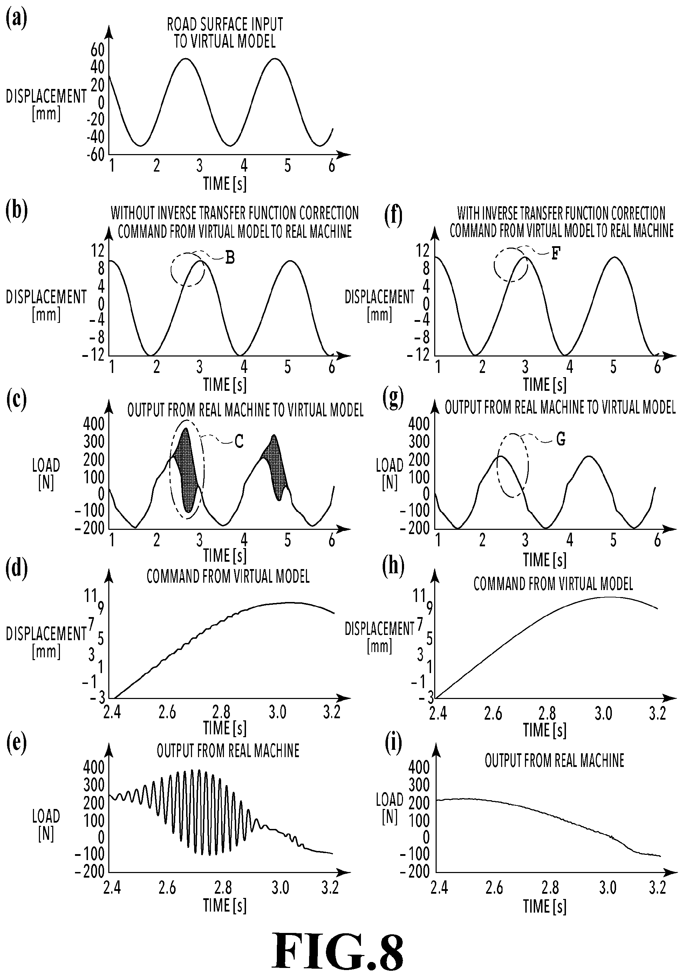

[Figure 8] Figures 8 are diagrams showing an example in which the test system according to the embodiment is applied to HILS test of a vehicle. Figure 8(a) is a displacement input to the virtual model in Figures 1(a) and 1(b) from a road surface shown in Figure 2. Figures 8(b) and 8(f) show calculation results of input signals (the difference in displacement between Y1 and Y2 calculated by the model in Figure 2) to the load device in Figures 1(a) and 1(b), and Figures 8(c) and 8(g) show loads of the test piece in Figures 1(a) and 1(b) fed back from the test piece to the virtual model. Figures 8(d), 8(e), 8(h) and 8(i) are enlarged diagrams of Figures 8(b), 8(c), 8(f) and 8(g), respectively.

[Description of Embodiment]

In the following, an embodiment of the present invention will be described with reference to the drawings. The drawings used for describing the embodiment are intended to describe a configuration of the embodiment, positional relationships between parts included in the configuration, and operations, effects and technical principles of the embodiment, and are not intended to limit the present invention to the specific configuration of the embodiment.

Figures 1(a) and 1(b) are functional block diagrams for illustrating a test system according to this embodiment. Figure 1(a) shows a test system 100 that does not perform correction based on a transfer function as a comparative example, and Figure 1(b) shows a test system 1 that performs correction with an inverse transfer function according to this embodiment. Both the test system 100 according to the comparative example and the test system 1 according to this embodiment include a test piece 40, which is a part of a real machine to be tested, an actuator 30 that actuates the test piece 40, a virtual model 11 that operates in association with the test piece, a controller 20 that controls the actuator 30, and a computing device 10 that performs a computation involved with the virtual model 11. The controller 20, the actuator 30 and the test piece 40 form a load device (system) 60.

The test system 1 differs from the test system 100 according to the comparative example in that the test system 1 includes an inverse transfer function correcting unit 50 between the virtual model 11 and the controller 20, and the inverse transfer function correcting unit 50 corrects a signal from the virtual model 11. An inverse transfer function retained as a feature in the inverse transfer function correcting unit 50 is a proper inverse transfer function that is determined based on a transfer function in a system including communication units between the test piece 40 and the actuator 30 and between the actuator 30 and the controller 20 and a communication unit between the computing device 10 and the controller 20. Although the communication units between the test piece 40 and the actuator 30 and between the actuator 30 and the controller 20 and the communication unit between the computing device 10 and the controller 20 are not shown in the drawings, it is obvious that there are communication units between the test piece 40 and the actuator 30 and between the actuator 30 and the controller 20 since signals $S_1$ and $S_2$ are sequentially transmitted from the controller 20 to the actuator 30 and the test piece 40. It is also obvious that there is a communication unit between the computing device 10 and the controller 20 since signals $S_0$, $S_1$ and $S_2$ are sequentially transmitted from the computing device 10 to the controller 20.

The inverse transfer function retained as a feature in the inverse transfer function correcting unit 50 is basically an inverse transfer function of a transfer function that holds between the signal $S_0$ output from the virtual model 11 and a signal $Sf_1$ that indicates a displacement of the test piece 40 driven by the actuator 30 in the test system 100 shown in Figure 1(a). The inverse transfer function is also an approximation of an inverse transfer function determined from the above-described transfer function of the test system 100 as a proper inverse transfer function.

The test systems 1 and 100 relate to a test of a suspension including a tire of a vehicle. As a shock absorber A (Figure 2), a real shock absorber as the test piece 40 is used instead of the virtual model 11, and the shock absorber A is actuated by the actuator 30 controlled by the controller 20. The other components than the shock absorber A, specifically, a spring, a tire under the spring, and a vehicle body on the spring, are implemented by the virtual model 11. The virtual model 11 is implemented in the real-time computing device 10 capable of high-speed computing, and the operation of the virtual model 11 is achieved by the computing device 10. A signal $S_3$ input to the virtual model 11 indicates a displacement of the tire caused by irregularities on a road surface Z during traveling of the vehicle. The displacement is generated by another road surface model (not shown) in the computing device 10. Furthermore, descriptions of the virtual model 11 shown in Figures 1(a) and 1(b) are intended to provide schematic expressions of the virtual model 11 and are not intended to show actual expressions.

Figure 2 is a diagram showing a physical system of the virtual model 11 shown in Figures 1(a) and 1(b). In the virtual model 11, a sprung mass M1 corresponds to the mass of the vehicle body on a spring Sp, and an unsprung mass M2 corresponds to the mass under the spring Sp, including an axle and a tire T. The shock absorber A is disposed between the sprung mass M1 and the unsprung mass M2. A lower surface of the tire T is in contact with the road surface Z, a position Y0 of the lower end of the tire T varies because of the irregularities on the road surface Z during traveling of the vehicle, and an input to the shock absorber A is the difference in displacement between a position Y2 and a position Y1, where the position Y1 is the position of the sprung mass M1, and the position Y2 is the position of the unsprung mass M2. An output of the shock absorber A is a load, and the load acts on the unsprung mass M1 and the sprung mass M1.

With regard to the shock absorber A, in HILS using a real machine instead of a theoretical model, the difference between the position Y2 and the position Y1 is input to the load device 60, the load produced by the shock absorber A driven by the load device 60 is fed back to the virtual model 11 as with the shock absorber A implemented by the virtual model 11, and then the computation of the virtual model 11 is performed.

Referring back to Figures 1(a) and 1(b), the computing device 10 performs sampling at regular time intervals (every 0.5 ms, for example), and calculates the displacements (Y1, Y2) of the masses in the virtual model 11 in response to the input Y0 from the road surface Z and the signal $S_0$ (Y1 - Y2) that indicates the displacement of the shock absorber A.

The controller 20 includes a comparison unit 21 and a control unit 22. The comparison unit 21 computes the difference between the signal $S_0$ (signal $S_1$: the absorber displacement Y2 - Y1 described above) received from the model 11 (via the inverse transfer function unit 50 in Figure 1(b)) and the signal $Sf_1$ fed back from the test piece 40, and outputs the difference to the control unit 22. Based on the difference signal from the comparison unit 21, the control unit 22 performs PID control, for example, to control the amount of actuation of the actuator 30, for example. Note that the controller 20 may be an electronic control unit (ECU) in the HILS test.

According to the signal $S_2$ from the control unit 22, the actuator 30 actuates the test piece 40 (shock absorber A) to achieve the operation (displacement Y2 - Y1) relating to the test evaluation item. The actuator 30 may be a hydraulic actuator or a motor-driven actuator, for example. The test piece 40 operates by being driven by the actuator 30. The operation is detected by a predetermined sensor (not shown), and the detection signal $Sf_1$ is output to the comparison unit 21 and used for controlling the actuator. A signal $Sf_2$ (load) is output to the virtual model 11 and used for calculation in a subsequent step.

When the shock absorber A is not implemented by a real machine and is completely simulated with a model, the displacement $S_0$ of the absorber calculated on the model is input to the modelled absorber at the same time, and the computation in a subsequent step is performed using a load calculated by the modelled absorber. However, in the HILS system that uses a real shock absorber A, a lag and an amplitude variation occur between the signal $Sf_1$ indicating the displacement of the shock absorber A and the signal $S_0$ because of the controller 20 and the actuator 30. Therefore, the load signal generated by the real shock absorber A also lags behind what the load signal would otherwise be, and accurate simulation cannot be achieved. Depending on the conditions, the simulation may diverge.

In the test system 1 according to this embodiment, the inverse transfer function correcting unit 50 serving as the inverse transfer function can correct the signal $S_0$ from the virtual model 11, thereby advancing the signal $S_0$ by the same amount as the amount by which the signal $S_1$ input to the comparison unit 21 lags behind the signal $S_0$ because of the load device 60 including the controller 20 and the actuator 30. Therefore, the test system 1 can solve the problem that the signal $Sf_1$ indicating the displacement of the shock absorber A temporally lags behind the signal $S_0$ from the virtual model 11 because of the actuator 30 and the like, and achieve more accurate simulation.

Specifically, in the system in Figure 1(a), $S_0 = S_1$, and the signal $Sf_1$ lags behind the signal $S_1$ by $\delta t$ seconds, for example. Therefore, the signal $Sf_2$ also lags behind the simulation purely based on the model by $\delta t$ seconds. In Figure 1(b), the signal $S_1$ is advanced with respect to the signal $S_0$ by $\delta t$ seconds through correction by the inverse transfer function correcting unit 50. The relationship between the signal $Sf_1$ and the signal $S_1$ remains unchanged, so that the signal $Sf_1$ lags by $\delta t$ seconds behind the signal $S_1$, which is advanced with respect to the signal $S_0$ by $\delta t$ seconds. Therefore, the lag of the signal $Sf_1$ with respect to the signal $S_0$ is eliminated, and the lag of the signal $Sf_2$ indicating the load input to the virtual model 11 is also eliminated.

Note that although Figure 1(b) shows the inverse transfer function correcting unit 50 disposed between the computing device 10 and the controller 20 in the load device 60 for the purpose of description, the inverse transfer function correcting unit 50 is implemented in the computing device 10 or the controller 20 in the actual implementation.

(Generation of Inverse Transfer Function)

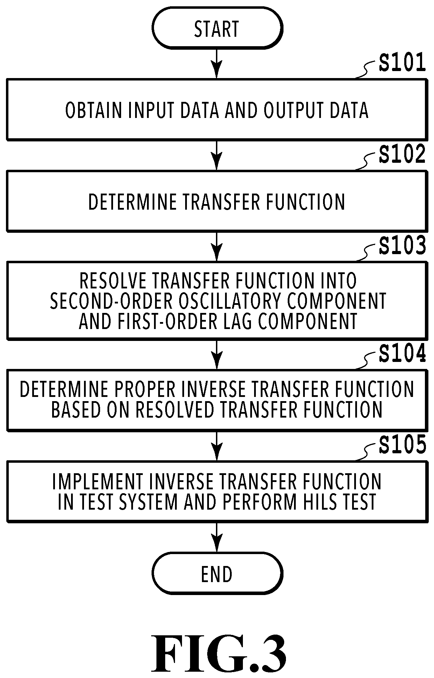

Figure 3 is a flowchart showing a process of generating an inverse transfer function in the inverse transfer function correcting unit 50 in Figures 1. This process is performed before the operation of the test system 1 in Figures 1.

First, in step S101, while the controller 20 is yet to be connected to the virtual model 11, the controller 20 input a signal $S_2$ indicating input data for each of a plurality of frequencies to the actuator 30 to provide the test piece 40 (shock absorber) with an oscillatory input, and obtains a displacement $Sf_1$ of the shock absorber A at that time. The oscillation can be provided by sinusoidal sweep excitation or random excitation in a predetermined frequency range. The predetermined frequency range is determined based on the characteristics of the test piece 40 to be simulated. In the case of the absorber of a vehicle, the frequency range may be higher than 0 Hz and up to 100 Hz, for example.

Table 1 below shows an example of actual measurement in this embodiment. Table 1 shows the gain and phase (deg) of the signal $Sf_1$ with respect to the signal $S_0$ on an oscillation frequency basis. The gain is shown in terms of both dB and actual number. The gain is an amplitude ratio of the signal $Sf_1$, and a negative phase means a temporal lag.

[Table 1]

| No | frequency(Hz) | gain(dB) | phase(deg) | gain in actual number |
|----|---------------|----------|------------|-----------------------|
| 1 | 1.342 | 0.101 | -2.929 | 1.0117 |
| 2 | 3.117 | 0.065 | -5.075 | 1.0076 |
| 3 | 4.817 | 0.046 | -7.766 | 1.0053 |
| 4 | 4.817 | 0.046 | -7.766 | 1.0053 |
| 5 | 5.467 | 0.043 | -8.720 | 1.0050 |
| 6 | 6.575 | 0.023 | -10.446 | 1.0027 |
| 7 | 7.521 | 0.010 | -11.945 | 1.0011 |
| 8 | 8.361 | 0.005 | -13.305 | 1.0006 |
| 9 | 9.123 | -0.016 | -14.503 | 0.9981 |
| 1 0 | 10.159 | -0.020 | -16.147 | 0.9977 |
| . . . | . . . | . . . | . . . | . . . |

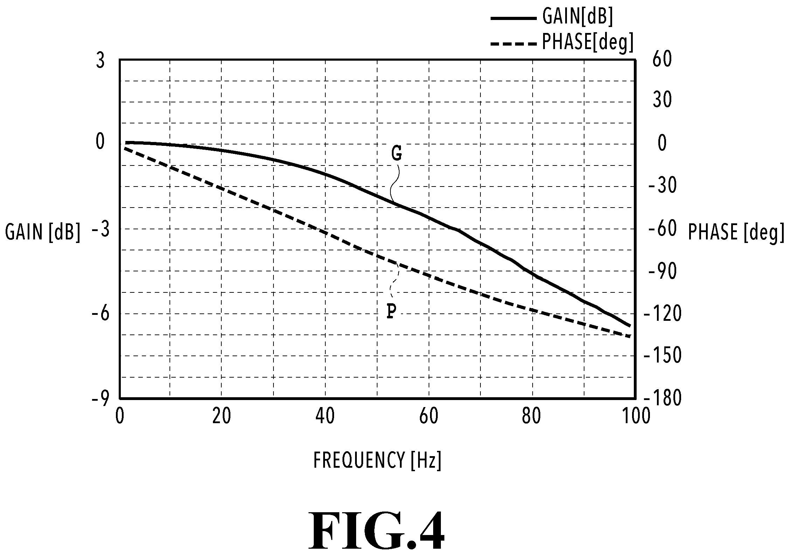

Figure 4 is a Bode diagram showing transfer functions represented by the measurement data in Table 1. In Figure 4, G denotes frequency characteristics of the gain, and P denotes frequency characteristics of the phase.

The measurement data in Table 1 above is expressed as a complex number as shown in Table 2 below. Specifically, the relationship between the gain and the phase in Table 1 above can be expressed as a complex number as follows:

$$G(j\omega_k) = Ae^{j\varphi} = A(\cos\varphi + j\sin\varphi) = A\cos\varphi + jA\sin\varphi$$

$$= R_m + jI_m$$

In this formula, A denotes the gain (in actual number), and $\varphi$ denotes the phase (deg). Therefore, the values in Table 1 are transformed into the values in Table 2 according to the above formula.

[Table 2]

| No | frequency(Hz) | real part(Rm) | imaginary part(Im) |
|---|---|---|---|
| 1 | 1.342 | 1.0104 | −0.0517 |
| 2 | 3.117 | 1.0036 | −0.0891 |
| 3 | 4.817 | 0.9961 | −0.1357 |
| 4 | 4.817 | 0.9961 | −0.1358 |
| 5 | 5.467 | 0.9934 | −0.1524 |
| 6 | 6.575 | 0.9861 | −0.1818 |
| 7 | 7.521 | 0.9795 | −0.2072 |
| 8 | 8.361 | 0.9738 | −0.2303 |
| 9 | 9.123 | 0.9663 | −0.2500 |
| 10 | 10.159 | 0.9584 | −0.2775 |
| . . . | . . . | . . . | . . . |

In step S102, an approximate mathematical expression of the transfer function is then determined using the transfer function data expressed as discrete numerical values obtained in step S101.

(General formula of Transfer Function)

To determine a transfer function appropriate to the measurement data, first, a transfer function expressed as a general formula is determined as a reference for comparison. The general formula of the transfer function can be expressed as the following formula (1).
[Formula 1]

$$G(s) = \frac{b_{n-1}s^{n-1}+ \cdots +b_1 s^1+b_0}{a_n s^n+a_{n-1}s^{n-1}+ \cdots +a_1 s^1+1} \qquad \text{... formula (1)}$$

In the system using the actuator according to this embodiment, the above formula (1) can be empirically approximated as the following formula with a numerator of 1.
[Formula 2]

$$G(s) = \frac{1}{a_n s^n+a_{n-1}s^{n-1}+ \cdots +a_1 s^1+1} \qquad \text{... formula (2)}$$

The formula (2) is expressed as a complex number as follows.
[Formula 3]

$$G(j\omega) = \frac{1}{a_n(j\omega)^n + a_{n-1}(j\omega)^{n-1} + \cdots + a_1(j\omega)^1 + 1} = \frac{1}{R_e + jI_e} = \frac{R_e - jI_e}{R_e^2 + I_e^2}$$

$$= \frac{R_e}{R_e^2 + I_e^2} - j\frac{I_e}{R_e^2 + I_e^2} = R_e A_e^2 - j\ I_e A_e^2$$

... formula (3)

In this formula,

[Formula 4]

$$Ae = \frac{1}{\sqrt{R_e^2 + I_e^2}}$$

In the formula (3), when n is even,

$$R_e = a_n(j\omega)^n + a_{n-2}(j\omega)^{n-2} + \ldots - a_2\omega^2 + 1$$

$$= [(j\omega)^n, (j\omega)^{n-2}, \ldots, -\omega^2][a_n, a_{n-2}, \ldots, a_2]' + 1 = A_{RE}a_{re} + 1$$

... formula (4)

$$I_e = j^{n-2}a_{n-1}\omega^{n-1} + j^{n-4}a_{n-3}\omega^{n-3} + \ldots + a_1\omega$$

$$= [j^{n-2}\omega^{n-1}, j^{n-4}\omega^{n-3}, \ldots, \omega][a_{n-1}, a_{n-3}, \ldots, a_1]' = A_{IM}a_{im}$$

... formula (5)

In the formula (3), when n is odd,

$$R_e = a_{n-1}(j\omega)^{n-1} + a_{n-3}(j\omega)^{n-3} + \ldots - a_2\omega^2 + 1$$

$$= [(j\omega)^{n-1}, (j\omega)^{n-3}, \ldots, -\omega^2][a_{n-1}, a_{n-3}, \ldots, a_2]' + 1 = A_{RE}a_{re} + 1$$

… formula (6)

$$I_e = j^{n-1}a_n\omega^n + j^{n-3}a_{n-2}\omega^{n-2} + \ldots + a_1\omega$$

$$= [j^{n-1}\omega^n, j^{n-3}\omega^{n-2}, \ldots, \omega][a_n, a_{n-2}, \ldots, a_1]' = A_{IM}a_{im}$$

… formula (7)

In the formulas (4) to (7) above, all the indices of the imaginary code j are even, so that the calculation result is [-1] or [1]. Here, $A_{RE}a_{re}$ and $A_{IM}a_{im}$ are products of matrices. $A_{RE}$ and $A_{IM}$ can be calculated if the angular frequency $\omega$ is known.

(Transfer Function based on Measurement Data)

Next, a transfer function based on the measurement data is determined by comparison between the measurement data and the general formula of the transfer function determined above.

The measurement data shown in Table 2 is expressed as a complex number as follows.

8

$$G(j\omega_k) = Ae^{j\varphi} = A(\cos\varphi + j\sin\varphi) = A\cos\varphi + jA\sin\varphi = R_m + jI_m$$

$$\dots \text{ formula (8)}$$

On the other hand, the complex representation of the formula (2) is as follows.
[Formula 5]

$$G(j\omega) = \frac{R_e}{R_e^2 + I_e^2} - j\frac{I_e}{R_e^2 + I_e^2} = R_e A_e^2 - j\, I_e A_e^2$$

$$\dots \text{ formula (9)}$$

Comparison of the formulas (8) and (9) results in the formulas (10) and (11).
[Formula 6]

$$R_e = {R_m}\big/{A_e^2}$$

$$\dots \text{ formula (10)}$$

[Formula 7]

$$I_e = {-I_m}\big/{A_e^2}$$

$$\dots \text{ formula (11)}$$

Here, by approximating the gain Ae in these formulas as the gain A in the measurement data, the formulas (10) and (11) are expressed as the formulas (12) and (13), respectively.
[Formula 8]

$$R_e = {R_m}\big/{A^2}$$

$$\dots \text{ formula (12)}$$

[Formula 9]

$$I_e = {-I_m}\big/{A^2}$$

$$\dots \text{ formula (13)}$$

In the formulas (12) and (13), $R_m$ and $I_m$ for each frequency are obtained from the measurement data, so that the right-hand sides of the formulas (12) and (13) are known. Furthermore, by subtracting the formulas (4) to (7) into the left-hand sides of the formulas (12) and (13), the formulas (12) and (13) are reduced to the following formulas (14) and (15), respectively.

$$A_{RE}a_{re} = B_{RE} \dots \text{ formula (14)}$$

$$A_{IM}a_{im} = B_{IM} \dots \text{ formula (15)}$$

In the formulas (14) and (15), $B_{RE}$ and $B_{IM}$ in the right-hand sides are expressed as matrices and therefore are groups of measurement data. When these are plotted, by determining $A_{RE}a_{re}$ and $A_{IM}a_{im}$ in the left-hand sides that are on the curves of the plots by the least squares method, $a_{re}$ and $a_{im}$, which are coefficients in the formula (2), can be determined based on the measurement data.

When the formula (2) is a third-order approximation for n = 3, the following formula (16) results.
[Formula 10]

$$G(s) = \frac{1}{a_3 s^3 + a_2 s^2 + a_1 s^1 + 1}$$

$$\ldots \text{ formula (16)}$$

That is,

$$A_{RE} = [-\omega^2] \, a_{re} = [a_2]$$

$$A_{IM} = [-\omega^3, \omega] \, a_{re} = [a_3, a_1]$$

In the case of the example measurement in Table 1, a1, a2, and a3 are determined as follows.

$$a_3 = 4.634 \times 10^{-9}$$

$$a_2 = 6.609 \times 10^{-6}$$

$$a_1 = 4.058 \times 10^{-3}$$

Substituting $a_1$, $a_2$, and $a_3$ into the formula (16) results in the following formula (17).
[Formula 11]

$$G(s) = \frac{1}{4.634 \times 10^{-9}s^3 + 6.609 \times 10^{-6}s^2 + 4.058 \times 10^{-3}s^1 + 1}$$

$$\ldots \text{ formula (17)}$$

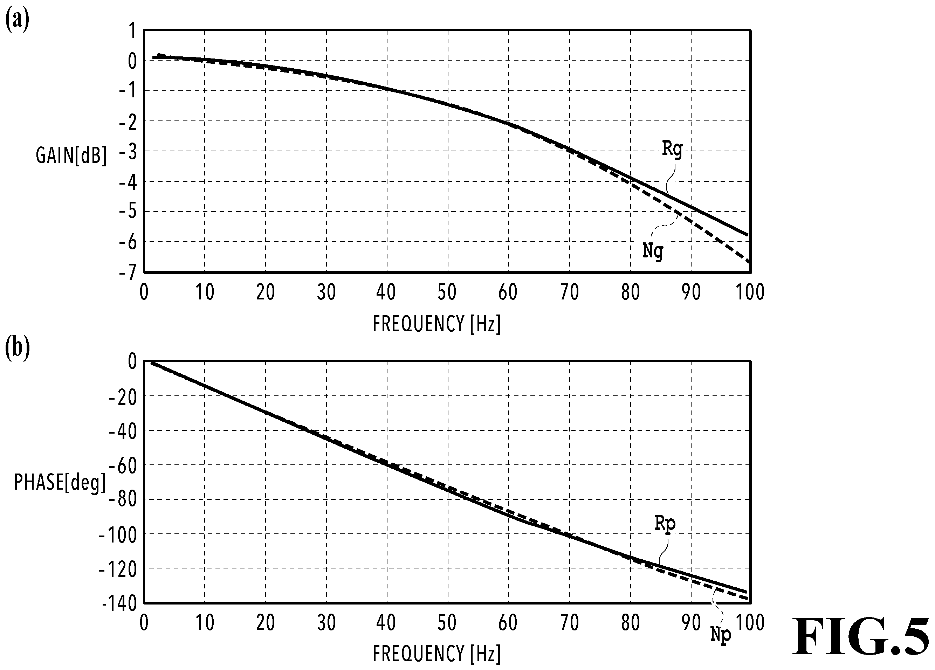

Figures 5(a) and 5(b) are Bode diagrams showing transfer functions approximated as the third-order polynomials represented by the above formula (17), showing the gain and the phase for comparison with the gain G and the phase P determined based on the measurement data shown in Figure 4. Rg and Rp shown in Figures 5(a) and 5(b) denotes the gain and the phase obtained by measurement, respectively, and Ng and Np denote the gain and the phase obtained by calculation, respectively. As shown in Figures 5(a) and 5(b), at 100 Hz, the error in gain is on the order of 1 dB and the error in phase is within 5 deg, and the accuracy is adequate for simulation of the absorber. Depending on the system, the accuracy may be inadequate. In such a case, the value of n can be increased, and the approximation can be achieved by the same calculation.

(Factorization of Transfer Function)

Referring back to Figure 3, in step S103, the transfer function determined in step S102 is resolved into a second-order oscillatory component and a first-order lag component. This is intended to clarify the effect of each component in the determination of an inverse transfer function (step S104). The first-order lag component is expressed by the following formula (18).
[Formula 12]

$$G(s) = \frac{1}{{s}/{\omega_a}+1}$$

... formula (18)

The second-order oscillatory component is expressed by the following formula (19), in which the solution of the quadratic equation in the denominator is a complex number when $\zeta < 1$ and a product of two first-order lag systems when $\zeta \geq 1$.

[Formula 13]

$$G(s) = \frac{1}{\left({s}/{\omega_b}\right)^2 + 2\zeta\left({s}/{\omega_b}\right)+1}$$

... formula (19)

Thus, the transfer function expressed by the formula (2) can be transformed into the formula (20).

[Formula 14]

$$G(s) = \frac{1}{a_n s^n + a_{n-1}s^{n-1} + \cdots + a_1 s^1 + 1} = \frac{1}{\prod_k \left(\left({s}/{\omega_k}\right)^2 + 2\zeta\left({s}/{\omega_k}\right) + 1\right)\prod_m \left({s}/{\omega_m} + 1\right)}$$

... formula (20)

By solving the following formula (21), coefficients in the factorization can be determined.

$$a_n s^n + a_{n-1}s^{n-1} + \ldots + a_1 s^1 + 1 = 0 \ldots \text{formula (21)}$$

Among the solutions, two solutions that are complex numbers are conjugate and therefore are second-order oscillatory components. Specifically, the solutions are expressed by the following formulas.

[Formula 15]

$$s_1 = \zeta\omega_k + j\sqrt{1 - \zeta^2}\,\omega_k$$

... formula (22)

[Formula 16]

$$s_2 = \zeta\omega_k - j\sqrt{1 - \zeta^2}\,\omega_k$$

... formula (23)

From the formulas (22) and (23), the following relationships are determined.

[Formula 17]

$$s_1 \times s_2 = \omega_k^2$$

$$s_1 + s_2 = 2\zeta\omega_k$$

[Formula 18]

$$\omega_k = \sqrt{s_1 \times s_2}$$

[Formula 19]

$$\zeta = \frac{s_1 + s_2}{2\omega_k}$$

In the example of the formula (17), by solving the denominator:

$$4.634 \times 10^{-9}s^3 + 6.609 \times 10^{-6}s^2 + 4.058 \times 10^{-3}s^1 + 1 = 0,$$

the following solutions result.

$$s_1 = 439.95 + j448.84$$

$$s_2 = 439.95 - j448.84$$

$$s_3 = 546.3$$

$s_1$ and $s_2$ are conjugate and therefore form a second-order oscillatory component.

[Formula 20]

$$\omega_1 = \sqrt{(-439.95)^2 + (448.84)^2} = 628.5 \ rad/s \qquad \cdot \cdot \cdot (100\mathrm{Hz})$$

[Formula 21]

$$\zeta = \frac{439.95 + 439.95}{2 \times 628.5} = 0.7$$

$$\omega_2 = s_3 = 546.3 \ rad/s \qquad \cdot \cdot \cdot (87\mathrm{Hz})$$

$$\omega_2 = s_3 = 546.3 \ rad/s \ \ldots \ (87 \ Hz)$$

From the above results, the formula (17) can be rewritten as follows.
[Formula 22]

$$G(s) = \frac{1}{4.634 \times 10^{-9}s^3 + 6.609 \times 10^{-6}s^2 + 4.058 \times 10^{-3}s^1 + 1}$$

$$= \frac{1}{\left(\left(^s/_{628.5}\right)^2 + 2 \times 0.7\left(^s/_{628.5}\right) + 1\right)\left(^s/_{546.3} + 1\right)}$$

... formula (24)

Referring back to Figure 3 again, in step S104, a proper inverse transfer function is determined based on the transfer function resolved as described above. Although, in general, an inverse of the determined transfer function is an inverse transfer function, the inverse transfer function is not proper. In that case, real-time calculation cannot be performed, the lag due to the inverse transfer function cannot be corrected, and therefore, accurate HILS simulation cannot be performed. In order to determine a proper inverse transfer function, the denominator has to include a term in which the order of s is equal to or higher than the order of s in the numerator. That is, a proper transfer function means a transfer function that satisfies a condition: the order of s in the numerator $\leq$ the order of s in the denominator. In this embodiment, considering the calculation amount and the calculation capacity, the denominator includes a term in which the order of s is the same as the order of s in the numerator.

In this embodiment, if the formula (24) is substituted with G(s) = 1/(((s/$\omega_1$)$^2$ + 2$\zeta$ (s/$\omega_1$) + 1)·(s/$\omega_2$)), a proper transfer function whose denominator includes a term of s$^3$ that has the same order as s in the numerator is expressed by the following formula (25).

[Formula 23]

$$G_{inv}(s) = \frac{\left(\left(s/\omega_{b1}\right)^2 + 2\zeta_b\left(s/\omega_{b1}\right) + 1\right)\left(s/\omega_{b2} + 1\right)}{\left(\left(s/\omega_{a1}\right)^2 + 2\zeta_a\left(s/\omega_{a1}\right) + 1\right)\left(s/\omega_{a2} + 1\right)} = \frac{b_0 s^3 + b_1 s^2 + b_2 s + C}{s^3 + a_1 s^2 + a_2 s + C}$$

$$\dots \text{ formula (25)}$$

The formula (25) includes parameters $\omega_{a1}$, $\omega_{a2}$, $\omega_{b1}$, $\omega_{b2}$, $\zeta_a$, and $\zeta_b$. In this embodiment, by adjusting these parameters, the proper inverse transfer function of the formula (25) is determined so as to come closer to the inverse transfer characteristics of the transfer function of the test system while considering the effects of the first-order lag component (low-pass filter) and the second-order oscillatory component. Each parameter may be manually or automatically determined. The following are example conditions for determining the parameters.

(1) With regard to the denominator of the formula (25), in order to reduce the effect of the phase lag, the frequencies $\omega_{a1}$ and $\omega_{a2}$ are four or more times $\omega_1$ and $\omega_2$ or the maximum frequency that can be simulated by the computing device.
(2) With regard to the denominator, again, in order to reduce the effect of the phase lag, $\zeta_a$ is equal to or less than 0.2.
(3) With regard to the numerator of the formula (25), the phase lags to some extent and the gain decreases because of the second-order term and the first-order term in the denominator. Therefore, $\omega_{b1}$ and $\omega_{b2}$ are set to be smaller than $\omega_1$ and $\omega_2$.
(4) The parameters are adjusted as described above, and a Bode diagram (frequency characteristics of the gain and the phase) of the inverse transfer function including these parameters is determined. And the adjustment described above is repeated until the difference between the determined gain and the required gain falls within 3 dB, and the difference between the determined phase and the required phase falls within 10 deg. Here, the "required gain or phase" means the frequency characteristics of the gain and the phase expressed by the inverse transfer function (referred to as a "theoretical inverse transfer function", hereinafter) of the transfer function determined as the formula (24).

The settings described above are provided as a general guideline and are not intended to limit this embodiment to the parameter adjustment according to such procedures or settings.

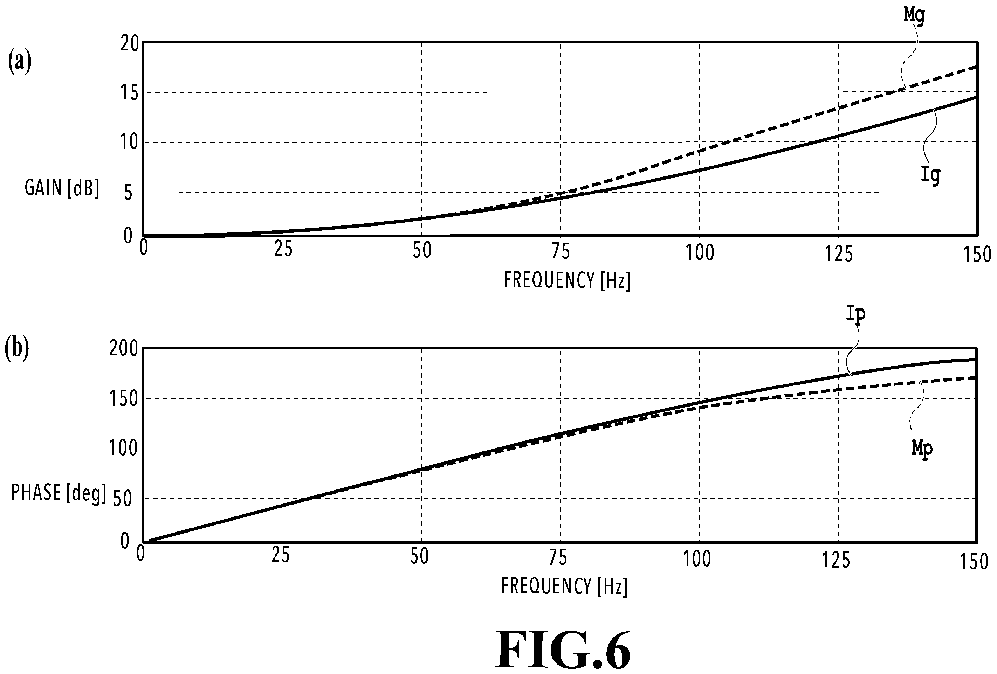

Figures 6(a) and 6(b) are Bode diagrams showing the inverse transfer functions determined in this embodiment for comparison with theoretical inverse transfer functions. Figure 6(a) shows frequency characteristics of the gain (dB), and Figure 6(b) shows frequency characteristics of the phase (deg). Curves Ig and Ip in Figures 6(a) and 6(b) show the gain and phase of a theoretical inverse transfer function, respectively, and curves Mg and Mp show the gain and phase of the inverse transfer function determined in this embodiment, respectively. With regard to the frequency characteristics of the determined gain and phase, as described above, the difference in gain from the theoretical inverse transfer function falls within 3 dB, and the difference in phase from the theoretical inverse transfer function falls within 10 deg. Thus, the response lag (phase lag) in the test system in this embodiment is adequately reduced.

The allowable errors in gain and phase described here are those for the absorber according to this embodiment and do not hold true for all systems. The allowable errors vary with the characteristic frequency range of the system to be evaluated.

In this embodiment, by increasing the parameters $\omega_{a1}$ and $\omega_{a2}$ as far as possible, parameters $\omega_{b1}$, $\zeta_b$ and $\omega_{b2}$ can be brought closer to the parameters $\omega_1$, $\zeta_1$ and $\omega_2$, and the inverse transfer function can be brought closer to the theoretical inverse transfer function at higher frequencies. In this case, it is required to perform calculation with a shorter sampling time, which means that the computing device or controller is required to have higher performance. When the frequency range of the system to be evaluated by HILS is low, adequate matching is achieved at lower frequencies, so that the parameters $\omega_{a1}$ and $\omega_{a2}$ can be decreased, thereby reduce the calculation load and enabling an inexpensive evaluation system to be built.

Table 3 shows the parameters $\omega_1$, $\omega_2$ and $\zeta_1$ of the theoretical inverse transfer function and the parameters $\omega_{a1}$, $\omega_{a2}$, $\omega_{b1}$, $\omega_{b2}$, $\zeta_a$ and $\zeta_b$ of the inverse transfer function generated by approximation.

[Table 3]

| | | |
|---|---|---|
| $\omega_1$ | 628.5 rad/s (100Hz) | theoretical inverse transfer function |
| $\zeta_1$ | 0. 7 | |
| $\omega_2$ | 546.3 rad/s (87Hz) | |
| $\omega_{b1}$ | 534.07 rad/s (85Hz) | proper inverse transfer function generated by approximation |
| $\zeta_b$ | 0.7 | |
| $\omega_{b2}$ | 534.07 rad/s (85Hz) | |
| $\omega_{a1}$ | 2513.3 rad/s (400Hz) | |
| $\zeta_a$ | 0.1445 | |
| $\omega_{a2}$ | 2513.3 rad/s (400Hz) | |

(Evaluation with Inverse Transfer Function)

Referring back to Figure 3 again, once the proper inverse transfer function is determined, in step S105, the inverse transfer function is implemented in the test system 1 as shown in Figure 1(b). Note that the inverse transfer function may be implemented in the computing device as with the case of the model computation or may be implemented in a computing unit (not shown) of the controller 20 for the test piece 40 as a real machine. Note that the inverse transfer function is typically implemented in the component having higher computational capacity.

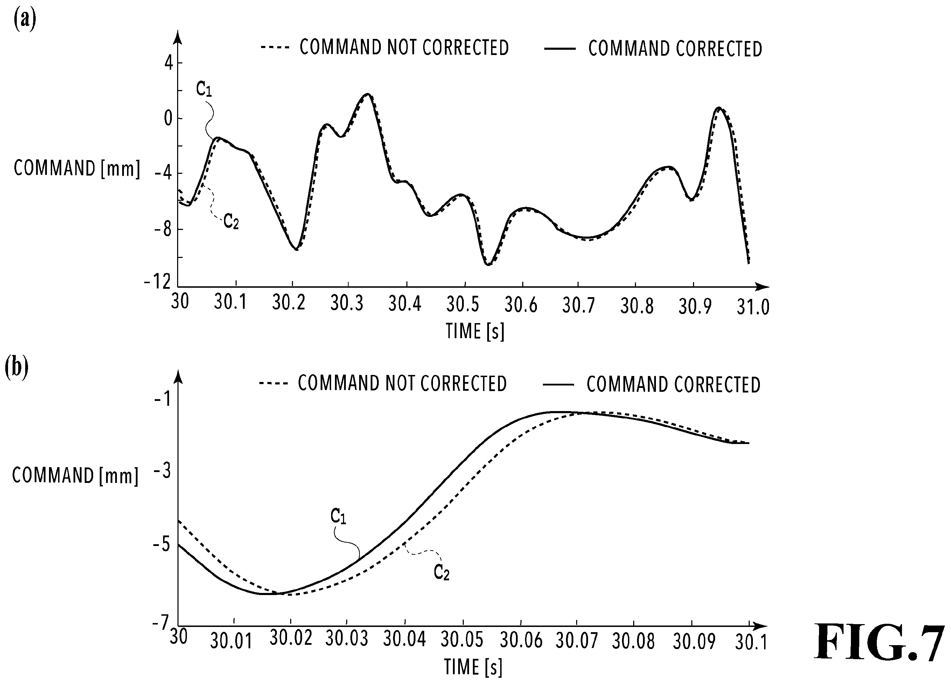

Figures 7(a) and 7(b) and Figures 8(a) to 8(i) are diagrams for illustrating the effect of the inverse transfer function correcting unit 50 serving as the inverse transfer function in this embodiment. Figure 7(a) is a diagram showing, for comparison, a signal (command) c2 input to the actuator 30 that is not corrected by the inverse transfer function correcting unit 50 of the test system 100 in Figure 1 and a signal (command) c1 input to the actuator 30 having passed through the inverse transfer function correcting unit of the test system 1. Figure 7(b) is an enlarged diagram showing the signals c1 and c2 in the range from 30s to 30.1s on the horizontal axis in Figure 7(a). In Figures 7(a) and 7(b), the horizontal axis indicates the time (s), and the vertical axis indicates the displacement (mm).

A relationship between the lag time and phase of the signal is expressed by the following formula (26) of the phase lag $\Phi$, where F denotes the frequency and $\delta T$ denotes the lag.

$$\Phi = 360° \times F \times \delta T \ldots \text{formula (26)}$$

In the example shown in Figure 7(a), provided that $\delta T = 0.0043s$ and $F = 60$ Hz, a lag of $\Phi = 92.8°$ (approximately a quarter of the period) (which means the time required for the signal $Sf_2$ output from the test piece 40 to be input to the computing device 10) occurs, and accurate simulation cannot be performed. In this embodiment, as shown in Figure 7(b), the signal c1 changes in displacement at an earlier timing than the signal c2 (the signal c1 is advanced with respect to the signal c2). According to this embodiment, since the signal c1 is advanced, the signals $Sf_1$ and $Sf_2$ output from the test piece 40 are also advanced, and the lag of the signal in the computing device 10 is eliminated, so that accurate simulation can be performed.

Figure 8(a) is a diagram showing a signal $S_0$ that indicates a displacement input to the virtual model 11 in Figures 1(a) and 1(b) from the road surface Z shown in Figure 2. Figure 8(b) is a diagram showing a signal $S_1$ that is input to the load device 60 from the test system 100, Figure 8(c) is a diagram showing a signal $Sf_2$ that is fed back to the virtual model 11 from the test piece 40 of the test system 100, Figure 8(d) is an enlarged diagram showing the region B in Figure 8(b), and Figure 8(e) is an enlarged diagram showing the region C in Figure 8(c). In Figures 8(a) to 8(e), the horizontal axis indicates the time. In Figures 8(a), 8(b) and 8(d), the vertical axis indicates the displacement. In Figures 8(c) and 8(e), the vertical axis indicates the load.

Figure 8(f) is a diagram showing a signal $S_1$ that is input to the load device 60 from the test system 1, Figure 8(g) is a diagram showing a signal $Sf_2$ that is fed back to the virtual model 11 from the test piece 40 of the test system 1, and Figure 8(h) is an enlarged diagram showing the region F in Figure 8(f), and Figure 8(i) is an enlarged diagram showing the region G in Figure 8(g). In Figures 8(f) to 8(i), the horizontal axis indicates the time. In Figures 8(f) and 8(h), the vertical axis indicates the displacement. In Figures 8(g) and 8(i), the vertical axis indicates the load. That is, Figures 8(b) to 8(e) show results obtained with the test system 100 in Figure 1(a) that are not corrected by the inverse transfer function correcting unit 50. Figures 8(f) to 8(i) show results obtained with the test system 1 that are corrected by the inverse transfer function correcting unit 50.

In this embodiment, a road surface input to the virtual model 11 is obtained from a simulation road surface having irregularities of ±50 mm and sinusoidally changes along the travel direction of the vehicle as shown in Figure 8(a). The road surface input varies with a cycle of 0.5 Hz at the simulation vehicle speed.

In this test, a real shock absorber is used as the test piece 40. As shown in Figures 8(b) and 8(f), although the road surface input is sinusoidal, and the absorber displacement input to the real machine also smoothly changes in an approximately sinusoidal manner, the slope of the absorber load change is discontinuous, has an intense nonlinearity and includes high frequency components. This load signal is fed back to the model (the parts shown as the regions B and F in the drawings).

As shown in Figures 8(b) to 8(e), when the correction with the inverse transfer function is not performed, in the regions B and C in Figures 8(b) and 8(c) or in the time range from 2.4s to 3.0s in Figures 8(d) and 8(e), the effect of a high frequency component at nearly 40 Hz gradually increases, and an unwanted oscillation of a high frequency component is superimposed on the command to the real machine calculated on the model. This oscillatory command causes the shock absorber A to oscillate at a high frequency and causes the load signal to the virtual model 11 to be oscillatory. This is because of the erroneous calculation result due to the phase lag of the high frequency component in the load signal described above. To the contrary, as shown in Figures 8(f) to 8(i), when the correction with the inverse transfer function is performed, the oscillation described above does not occur, and correct HILS evaluation can be achieved. In this embodiment, since it is known that the oscillation described above does not occur, any such oscillation occurring during traveling of a real vehicle can be recognized as a simulation error. However, in the case of a new product whose characteristics are not known, the absence of the correction with the inverse transfer function leads to an erroneous result.

Note that the timing, frequency or magnitude of the oscillation described above varies with the test conditions, the test piece or the characteristics of the load device. In other words, the oscillation is caused by a change in frequency phase and amplitude of the load component. Therefore, although the oscillation frequency and time are included in the regions B and C in the example shown in Figures 8(b) and 8(c), this embodiment is not limited to this example, and the oscillation frequency and time (timing) vary with the test conditions.

Here, the proper transfer function is a transfer function that is strictly realizable in the real world or more specifically a transfer function that satisfies a condition that the order of s in the numerator ≤ the order of s in the denominator. That is, a non-proper transfer function can be divided into a proper term and a non-proper term. The output of the test system can be obtained by developing the transfer function. When the transfer function is not proper, the output includes a time derivative of the input because of the effect of the non-proper term. The time derivative is a factor in inhibiting the realization in the real world. As described above, in this embodiment, the output signal of the virtual model 11 is corrected with an inverse transfer function of a proper transfer function, that is, a proper inverse transfer function. Therefore, according to this embodiment, the response lag in the test system caused by the actuator 30 and the like can be eliminated, and the test system 1 can perform simulation with higher accuracy.

A first aspect of the present invention described above is a test system including: a test piece as a part of a real machine that is to be tested; an actuator that actuates the test piece; a virtual model that operates in association with the test piece; a controller that controls the actuator; a computing device that computes the virtual model; and an inverse transfer function correcting unit that corrects a signal from the virtual model with a proper inverse transfer function that is determined based on a transfer function of a system including communication units between the test piece and the actuator and between the actuator and the controller and a communication unit between the computing device and the controller, in which the controller controls the actuator based on the signal corrected by the inverse transfer function correcting unit.

A second aspect of the present invention is the test system according to the aspect described above, in which the inverse transfer function correcting unit is implemented in the computing device.

A third aspect of the present invention is the test system according to the aspect described above, in which the inverse transfer function correcting unit is implemented in a real-machine controlling computing unit that actuates the test piece.

A fourth aspect of the present invention is the test system according to the aspect described above, in which the transfer function is an approximated transfer function in which a numerator is a 0-th order Laplace variable.

A fifth aspect of the present invention is the test system according to the aspect described above, in which the transfer function is an approximated transfer function in which a denominator is a third-order Laplace variable.

A sixth aspect of the present invention is a control method for a test system, the test system including a test piece as a part of a real machine that is to be tested, an actuator that actuates the test piece, a virtual model that operates in association with the test piece, a controller that controls the actuator, and a computing device that computes the virtual model, the control method including: a step of correcting a signal from the virtual model with a proper inverse transfer function that is determined based on a transfer function of a system including communication units between the test piece and the actuator and between the actuator and the controller and a communication unit between the computing device and the controller; and a step of controlling the actuator based on the signal corrected in the inverse transfer function correcting step.

A seventh aspect of the present invention is the control method for a test system described above, in which a transfer function of a system including the actuator and the test piece is divided into a real part and an imaginary part, and the transfer function is determined according to an approximation based on a least squares method.

An eighth aspect of the present invention is the control method for a test system described above, in which a parameter of an approximated inverse transfer function is determined by dividing the transfer function into a first-order lag system and a second-order oscillatory system.

[Reference Signs List]

| 1, 100 | test system |
| 10 | computing device |
| 11 | virtual model |
| 20 | controller |
| 21 | comparison unit |
| 22 | control unit |
| 30 | actuator |
| 40 | test piece |
| 50 | inverse transfer function correcting unit |
| 60 | load device |
| A | shock absorber |

**Claims**

1. A test system comprising:

   a test piece as a part of a real machine that is to be tested;
   an actuator that actuates the test piece;
   a virtual model that operates in association with the test piece;
   a controller that controls the actuator;
   a computing device that computes the virtual model; and
   an inverse transfer function correcting unit that corrects a signal from the virtual model with a proper inverse transfer function that is determined based on a transfer function of a system including communication units between the test piece and the actuator and between the actuator and the controller and a communication unit between the computing device and the controller,
   wherein the controller controls the actuator based on the signal corrected by the inverse transfer function correcting unit.

2. The test system according to claim 1, wherein the inverse transfer function correcting unit is implemented in the computing device.

3. The test system according to claim 1, wherein the inverse transfer function correcting unit is implemented in a real-machine controlling computing unit that actuates the test piece.

4. The test system according to claim 1, wherein the transfer function is an approximated transfer function in which a numerator is a 0-th order Laplace variable.

5. The test system according to claim 4, wherein the transfer function is an approximated transfer function in which a denominator is a third-order Laplace variable.

6. A method for controlling a test system, the test system including a test piece as a part of a real machine that is to be tested, an actuator that actuates the test piece, a virtual model that operates in association with the test piece, a controller that controls the actuator, and a computing device that computes the virtual model, the method comprising:

an inverse transfer function correcting step of correcting a signal from the virtual model with a proper inverse transfer function that is determined based on a transfer function of a system including communication units between the test piece and the actuator and between the actuator and the controller and a communication unit between the computing device and the controller; and
a step of controlling the actuator based on the signal corrected in the inverse transfer function correcting step.

7. The method for controlling a test system according to claim 6, wherein a transfer function of a system including the actuator and the test piece is divided into a real part and an imaginary part, and the transfer function is determined according to an approximation based on a least squares method.

8. The method for controlling a test system according to claim 6, wherein a parameter of an approximated inverse transfer function is determined by dividing the transfer function into a first-order lag system and a second-order oscillatory system.

EP 4 560 284 A1

(a)

COMPUTING DEVICE ⌐10

INPUT TO MODEL
(SUCH AS LOAD,
POSITION AND
SPEED)

CONTROLLER ⌐20

Sf₂

⌐100

⌐60

$\bar{x} = Ax + Bu$
$y = Cx + Du$

⌐11

MODEL

S₃        S₀

OUTPUT
FROM MODEL
(SUCH AS
POSITION AND
LOAD)

⌐21
+
−

CONTROL UNIT
(SUCH AS PID)

⌐22

S₁        S₂

ACTUATOR ⌐30

TEST PIECE ⌐40

Sf₁

(b)

COMPUTING DEVICE ⌐10

CONTROLLER ⌐20

Sf₂

⌐1

⌐60

$\bar{x} = Ax + Bu$
$y = Cx + Du$

⌐11

MODEL

S₃        S₀

INVERSE TRANSFER
FUNCTION CORRECTING
UNIT

⌐50

⌐21
+
−

CONTROL UNIT
(SUCH AS PID)

⌐22

S₁        S₂

ACTUATOR ⌐30

TEST PIECE ⌐40

Sf₁

# FIG.1

11

FIG.2

START

⌐S101
OBTAIN INPUT DATA AND OUTPUT DATA

⌐S102
DETERMINE TRANSFER FUNCTION

⌐S103
RESOLVE TRANSFER FUNCTION INTO
SECOND-ORDER OSCILLATORY COMPONENT
AND FIRST-ORDER LAG COMPONENT

⌐S104
DETERMINE PROPER INVERSE TRANSFER FUNCTION
BASED ON RESOLVED TRANSFER FUNCTION

⌐S105
IMPLEMENT INVERSE TRANSFER FUNCTION
IN TEST SYSTEM AND PERFORM HILS TEST

END

# FIG.3

FIG.4

EP 4 560 284 A1

(a)

(b)

FIG.5

EP 4 560 284 A1

(a)

(b)

FIG.6

EP 4 560 284 A1

(a)

(b)

FIG.7

(a)

ROAD SURFACE INPUT
TO VIRTUAL MODEL

DISPLACEMENT [mm]

(b)

WITHOUT INVERSE TRANSFER FUNCTION CORRECTION
COMMAND FROM VIRTUAL MODEL TO REAL MACHINE

B

DISPLACEMENT [mm]

(f)

WITH INVERSE TRANSFER FUNCTION CORRECTION
COMMAND FROM VIRTUAL MODEL TO REAL MACHINE

F

DISPLACEMENT [mm]

(c)

OUTPUT FROM REAL MACHINE TO VIRTUAL MODEL

C

LOAD [N]

(g)

OUTPUT FROM REAL MACHINE TO VIRTUAL MODEL

G

LOAD [N]

(d)

COMMAND FROM VIRTUAL MODEL

DISPLACEMENT [mm]

(h)

COMMAND FROM VIRTUAL MODEL

DISPLACEMENT [mm]

(e)

OUTPUT FROM REAL MACHINE

LOAD [N]

(i)

OUTPUT FROM REAL MACHINE

LOAD [N]

# FIG.8

25

## INTERNATIONAL SEARCH REPORT

| International application No. |
| --- |
| **PCT/JP2023/024982** |

**A.    CLASSIFICATION OF SUBJECT MATTER**

*G01M 17/04*(2006.01)i; *G01M 13/00*(2019.01)i; *G05B 13/04*(2006.01)i; *G05B 23/02*(2006.01)i
FI:    G01M17/04; G05B13/04; G05B23/02 Z; G01M13/00

According to International Patent Classification (IPC) or to both national classification and IPC

**B.    FIELDS SEARCHED**

Minimum documentation searched (classification system followed by classification symbols)

G01M17/00-17/10; G01M13/00-13/045; G01M99/00; G05B13/04; G05B23/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2009-58522 A (SHIMADZU CORP) 19 March 2009 (2009-03-19)<br>entire text, all drawings | 1-8 |
| A | JP 11-51820 A (FORD GLOBAL TECHNOL INC) 26 February 1999 (1999-02-26)<br>entire text, all drawings | 1-8 |
| A | WO 2022/070759 A1 (MEIDENSHA CORPORATION) 07 April 2022 (2022-04-07)<br>entire text, all drawings | 1-8 |
| A | WO 2009/110599 A1 (NATIONAL UNIVERSITY CORPORATION YOKOHAMA NATIONALUNIVERSITY) 11 September 2009 (2009-09-11)<br>entire text, all drawings | 1-8 |
| A | US 5610330 A (FORD MOTOR COMPANY) 11 March 1997 (1997-03-11)<br>entire text, all drawings | 1-8 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 August 2023** | **12 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/024982**

| Patent document cited in search report | | | Publication date (day/month/year) | Patent family member(s) | | | Publication date (day/month/year) |
|---|---|---|---|---|---|---|---|
| JP | 2009-58522 | A | 19 March 2009 | (Family: none) | | | |
| JP | 11-51820 | A | 26 February 1999 | US | 5900542 | A | |
| | | | | US | 5750890 | A | |
| | | | | EP | 893679 | A2 | |
| WO | 2022/070759 | A1 | 07 April 2022 | JP | 2022-55699 | A | |
| WO | 2009/110599 | A1 | 11 September 2009 | TW | 200943318 | A | |
| US | 5610330 | A | 11 March 1997 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63233402 A

- JP 2004053452 A